Europäisches Patentamt

European Patent Office

Office européen des brevets

(11) Numéro de publication: **0 281 588**
**B1**

# FASCICULE DE BREVET EUROPEEN

(45) Date de publication du fascicule du brevet:
**08.11.89**

(21) Numéro de dépôt: **87905628.1**

(22) Date de dépôt: **02.09.87**

(86) Numéro de dépôt international:
**PCT/FR 87/00341**

(87) Numéro de publication internationale:
**WO 88/02081 (24.03.88** Gazette **88/7)**

(51) Int. Cl.⁴: **F 16 H 55/08, F 16 H 35/02**

(54) **DENT POUR L'ACCOUPLEMENT PAR DENTURE DE DEUX SOLIDES, DENTURE EN RESULTANT ET ENGRENAGES EN FAISANT APPLICATION.**

(30) Priorité: **09.09.86 FR 8612609**

(43) Date de publication de la demande:
**14.09.88 Bulletin 88/37**

(45) Mention de la délivrance du brevet:
**08.11.89 Bulletin 89/45**

(84) Etats contractants désignés:
**AT DE GB IT NL SE**

(56) Documents cités:
**CH-A- 523 811**
**DE-A- 2 203 233**
**FR-A- 542 099**
**FR-A- 1 392 007**
**FR-A- 2 104 354**
**FR-A- 2 195 304**
**US-A- 2 842 977**

(73) Titulaire: **BOUCHET, Jacques, 9, square Gabriel Fauré,
F-75017 Paris (FR)**

(72) Inventeur: **BOUCHET, Jacques, 9, square Gabriel Fauré,
F-75017 Paris (FR)**

(74) Mandataire: **Robert, Jean-Pierre et al, CABINET
BOETTCHER 23, rue la Boétie, F-75008 Paris (FR)**

ACTORUM AG

# Description

Classiquement, l'entraînement par denture d'un solide par un autre solide autour de leur axe respectif de rotation se limite aux cames (engrenages ou autres sytèmes pignon-crémaillère).

Dans les engrenages, la courbe primitive de chaque solide est un cercle (cas des engrenages cylindriques ou coniques) ; dans les systèmes pignon-crémaillère, la courbe primitive de la crémaillère est un cercle de rayon infini. Dans la plupart des cas, le profil des dents qui équipent ces solides est en développante d'un cercle de diamètre constant (constituée par une droite dans le cas limite de la crémaillère).

Un tel agencement permet de transmettre, à partir d'une rotation uniforme de l'un des solides, une rotation uniforme à l'autre solide dans de bonnes conditions pour ce qui concerne la conduite de l'engrenage, l'angle sous lequel coopèrent les dents (résistance optimale aux efforts de transmission) et est en outre aisément réalisable. L'agencement de denture répond ainsi aux exigences d'une denture dite conforme.

Il existe d'autres types de denture (p. ex. US-A-2 842 977) équipant des courbes primitives non circulaires (notamment des ellipses), par lesquelles, à partir d'un mouvement uniforme de rotation de l'un des solides, on peut engendrer un mouvement non uniforme du solide mené. Cependant les dentures mises en œuvre ne satisfont pas aux critères de conformité et, de ce fait, n'ont pas trouvé d'application industrielle.

La présente invention entend proposer une denture conforme dans laquelle chaque dent est définie par un profil satisfaisant aux conditions énoncées plus haut, tant en ce qui concerne la conduite, la résistance aux efforts de transmission que la facilité de taillage, bien que les courbes primitives, ouvertes ou fermées, soient différentes du cercle ou de la droite, pour procurer un mouvement du solide mené autour de son axe de rotation, non uniforme comportant de ce fait des phases angulaires d'accélération ou de décélération, le mouvement du solide menant étant uniforme.

Plus précisément, la présente invention comme définie dans la revendication 1 a pour premier objet une dent pour l'accouplement par denture de deux solides roulant sans glisser l'un sur l'autre le long de leur courbe primitive, autre qu'entièrement circulaire, respective dans laquelle le profil de sa surface active est constitué par une partie en développante de cercle (flanc) déterminée par un angle de pression retenu et situé à l'intérieur de la courbe primitive et par une partie (face), à l'extérieur de la courbe primitive telle que le point de contact instantané entre la face de la dent et le flanc de la dent coopérante se situe sur la tangente au cercle de définition dudit flanc passant par le point de contact instantané des primitives, c'est-à-dire répondant au principe des enveloppes.

Le second objet de l'invention réside dans une denture comprenant une pluralité de dents telles que définies ci-dessus et dont la courbe primitive comporte au moins un arc denté de spirale logarithmique.

Dans une variante de réalisation de cette denture, la courbe primitive comporte au moins un arc denté, l'ellipse.

On notera à cet égard qu'une réalisation particulière de l'invention réside dans la présence d'au moins un arc de cercle dans la courbe primitive, ce dernier pouvant être un cas particulier soit de spirale logarithmique dont l'angle caractéristique est droit, soit d'ellipse dans laquelle la distance des foyers est nulle.

La denture selon l'invention peut également comporter, entre deux portions d'arc dentées, un arc de courbe primitive dépourvu de dents tangent à ses extrémités aux flanc et face des dents qu'il relie. Cet arc de courbe primitive sera un arc de spirale logarithmique ou d'ellipse.

Enfin l'invention a pour troisième objet un engrenage équipé d'une denture semblable à celle définie précédemment, dans lequel chacun des solides qui le constitue comporte une courbe primitive fermée composée d'une succession d'arcs de cercle, et/ou d'ellipse et/ou de spirale logarithmique associés. Dans une variante de cet engrenage que forme un ensemble pignon-crémaillère, le solide formant crémaillère comporte une courbe primitive ouverte, également composée d'une succession de segments de droite et/ou d'arcs de cercle, et/ou de spirale logarithmique associés aux arcs correspondants qui forment la courbe primitive du pignon.

On notera que la denture selon l'invention peut être, pour les parties de courbes primitives dentées, soit droite, soit hélicoïdale, soit en chevron.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

— La figure 1 est un schéma explicatif de la construction point par point d'une dent selon l'invention,

— la figure 2 illustre par un schéma le tracé partiel d'une courbe primitive d'un engrenage conforme à l'invention,

— la figure 3 montre par une vue en plan l'engrenage obtenu en équipant la courbe primitive de la figure 2 avec des dents tracées conformément à l'invention,

— la figure 4 est une vue d'un engrenage particulier conforme à l'invention susceptible d'engrener avec lui-même,

— la figure 5 illustre par un tracé de primitives une autre paire d'engrenages selon l'invention.

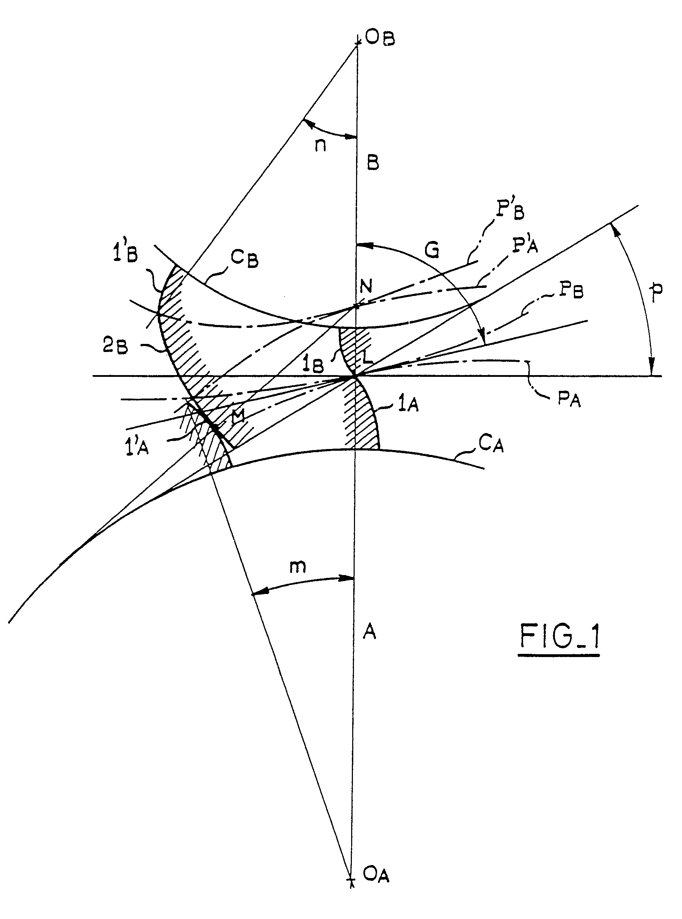

En se reportant tout d'abord à la figure 1, on voit deux solides A et B symbolisés par leur centre respectif de rotation OA et OB et par une portion de leur courbe primitive PA et PB en contact sur la ligne des centres en L. La tangente commune à ces courbes en L forme un angle G avec la ligne des centres. On rappellera que, si les courbes PA et PB sont des cercles, G est droit. Si les courbes PA et PB sont des spirales logarithmiques, G est constant et caractérise chacune des spirales de centre OA et OB.

Selon l'invention, on équipe chacune de ces courbes primitives d'une dent dont la partie 1A, 1B (flanc) située à l'intérieur de la courbe primitive possède un profil en développante de cercle. Le cercle CA, CB dont on se sert pour déterminer la développante est déterminé par l'angle de pression p désiré. Pour être certain d'un engrènement sans blocage, on choisira G égal ou supérieur au complément de l'angle p susdit. Les profils 1A et 1B sont donc parfaitement définis; ce sont les flancs de la dent.

On mentionnera à titre d'exemple une méthode parmi d'autres pour déterminer le profil de la face de chaque dent selon laquelle on fait tourner le solide A dans le sens direct d'un angle $m$. Les primitives PA et PB sont alors dans leur position P'A et P'B et au contact l'une de l'autre au point N. Le solide B ayant tourné dans le sens rétrograde sans glisser d'un angle $n$, les flancs 1A et 1B sont dans leur position 1'A et 1'B. Le point de contact entre le flanc 1'A et la face de la dent appartenant au solide B est défini comme le point M d'intersection de ce flanc avec la tangente au cercle CA passant par le point N. La face 2B est ainsi déterminée point par point et l'on peut calculer les coordonnées de son point courant par exemple dans un référentiel lié à B. On sait également déterminer par le calcul les limites de cette face de manière notamment que deux dents soient toujours en prise pendant l'engrènement.

La détermination de la face prolongeant le flanc 1A s'opère de la même manière en inversant les rôles des solides A et B et leur sens de rotation. Les flancs sont quant à eux fixés a priori pour prendre en compte la largeur souhaitée de chaque dent.

Ainsi, pourvu que la courbe primitive de chaque solide soit connue, on possède une méthode pour déterminer le profil des dents conformes dont on peut la pourvoir. Il existe des limites dans la forme et l'allure des primitives que l'on peut équiper de dents mais des arcs d'ellipse d'excentricité adéquate, ou des arcs de spirale logarithmique d'angle caractéristique adéquat, conviennent parfaitement pour recevoir une denture conforme. Les coordonnées du point courant des faces des dents pouvant être calculées, il est aisé de prévoir un logiciel pour ce calcul, voire d'associer à un calculateur programmé une machine automatique de taillage. On notera que cette méthode vaut également si la primitive est un arc de cercle. Dans ce cas, la face de chaque dent est également une développante de cercle.

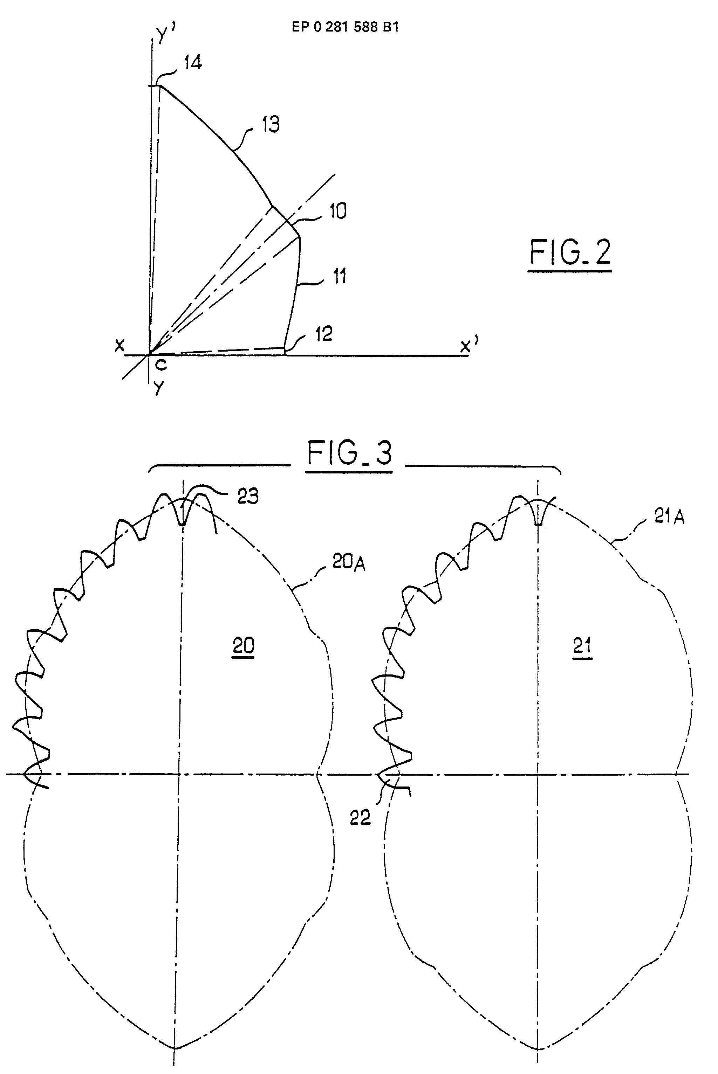

Sur la figure 2, on a représenté à titre d'exemple le quart d'une courbe primitive dont on déduit les autres parties par symétrie par rapport aux deux axes xx' et yy'. Ainsi, dans chaque quadrant la primitive est constituée par un arc de cercle 10 centré sur la bissectrice du quadrant d'angle au centre égal à 8 grades et de rayon égal à 50 millimètres. Vers l'axe xx', cet arc de cercle est suivi par un arc de cercle 12 d'angle au centre égal à 1,5 grade et de rayon égal à 35,502 millimètres. Vers l'axe yy', l'arc de cercle 10 se prolonge par un arc de spirale logarithmique 13, d'angle au centre de 45 grades, s'éloignant du centre C, lui-même suivi d'un arc de cercle 14 de rayon égal à 70,690 millimètres et d'angle au centre égal à 1 grade.

Par le calcul, on peut déterminer le quart de courbe primitive correspondant à celui représenté qui peut y rouler sans glisser. Celui-ci comportera, correspondant à l'élément 14, un arc de cercle de 35,188 millimètres de rayon et d'angle au centre égal à 2,009 grades, à l'élément 13, un arc de spirale s'éloignant du centre depuis l'arc de cercle susdit, d'angle au centre égal à 60,099 grades, à l'élément 10, un arc de cercle d'angle au centre égal à 55,878 millimètres et d'angle au centre égal à 7,158 grades, à l'élément 11, un arc de spirale s'éloignant du centre depuis l'arc de cercle précédent, d'angle au centre égal à 29,977 grades, et enfin un arc de cercle de 70,376 millimètres de rayon et d'angle au centre égal à 0,757 grade.

La détermination des courbes primitives associées étant réalisée, on choisira un nombre de dents qui, dans l'exemple réalisé et pour principalement des raisons de symétrie, sera de la forme $N = 4n + 2$. Ainsi dans le cas d'espèce, on équipera chaque solide de 30 dents (voir figure 3) qui, réparties régulièrement le long de chaque primitive, posséderont une «épaisseur» mesurée le long de ce périmètre égale à 5,881 millimètres, le calcul ayant montré que le périmètre total de chaque primitive est égal à 352,860 millimètres. Bien entendu, le nombre de dents sera fonction des efforts auxquels sont soumises les diverses dents et l'on peut adopter une répartition irrégulière de ces dernières le long du périmètre avec des «épaisseurs» variables.

La figure 3 illustre deux corps 20 et 21 dont les primitives 20A, 21A sont appareillées pour rouler l'une sur l'autre sans glisser conformément à ce qui a été illustré par la figure 2. On précisera que l'angle caractéristique des arcs de spirale logarithmique de ces deux corps est de 71 grades alors que l'angle de pression p a été choisi égal au complément de cet angle caractéristique, c'est-à-dire 29 grades. Ayant parfaitement déterminé tous les paramètres nécessaires du profil des dents, ce dernier a été déterminé sur chacun des corps 20 et 21 par application de la méthode évoquée en regard de la figure 1. La denture obtenue est conforme et les solides 20 et 21 peuvent engrener l'un avec l'autre en plaçant la dent 22 du solide 21 dans le creux 23 du solide 20.

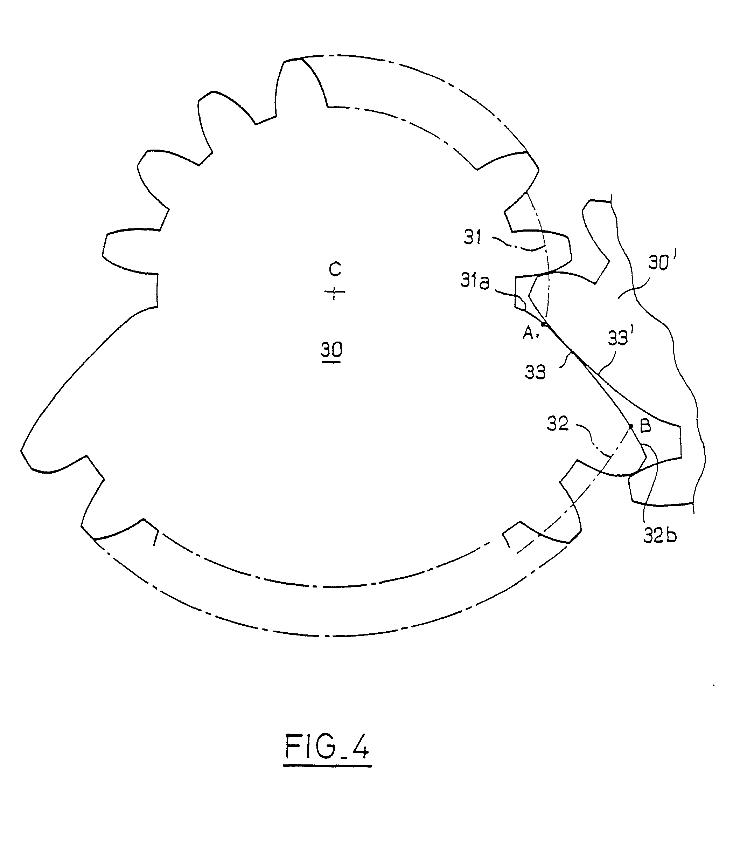

La figure 4 illustre un cas particulier d'engrenage 30 conforme à l'invention dont la primitive est constituée par deux arcs de cercle 31, 32 de rayons différents, raccordés par un arc de spirale logarithmique 33 tel qu'aux points de raccordement A et B, l'arc 33 soit tangent respectivement au flanc (en développante de cercle) 31$a$ de la dent inférieure et à la face (en développante de cercle) 32$a$ de la dent supérieure. Le dessin illustre la coopération de la portion 33 avec la portion 33' de l'engrenage 30' associé, qui dans ce cas est identique à celui représenté complètement, les portions 33 et 33' d'arc roulant sans glisser l'une sur l'autre tandis que les dents adjacentes sont en prise. L'arc de spirale 33 a, bien entendu, pour centre le centre C de rotation de l'engrenage 30.

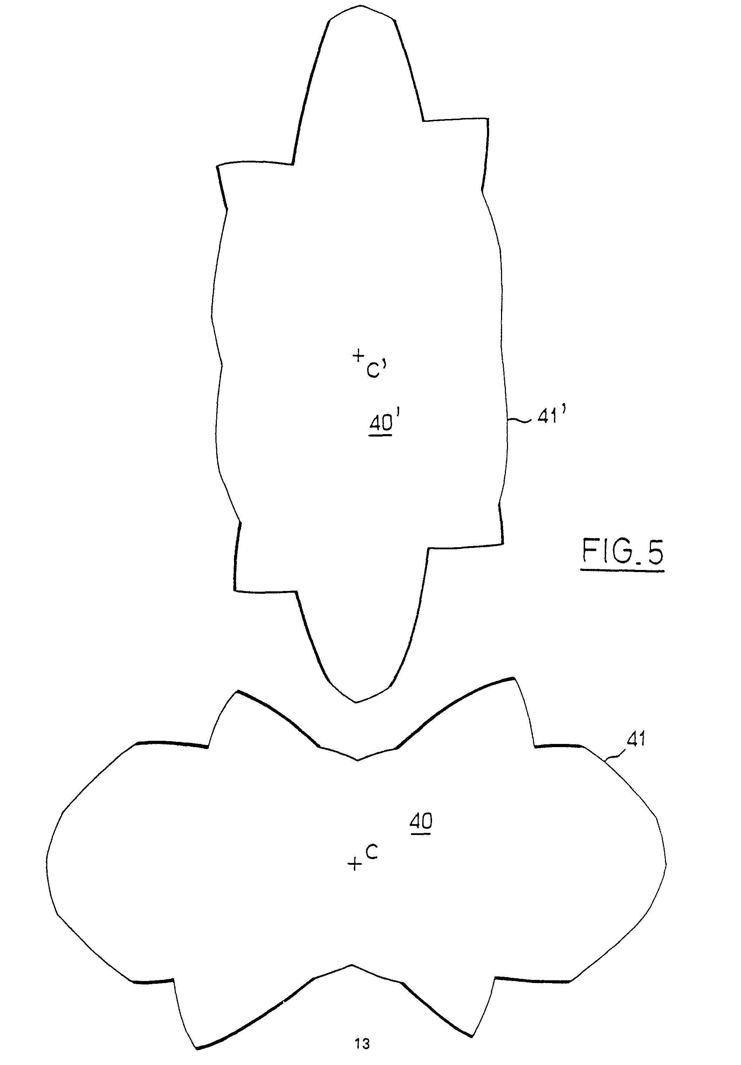

Un autre exemple d'engrenage conforme à l'invention est représenté en figure 5. Un premier solide 40 comporte une primitive fermée 41 formée par la succession d'arcs de spirale logarithmique dont certains (en trait fin) sont pourvus de dents et d'autres (en trait gras) agissent comme les portions 33 et 33' de la figure précédente en répondant aux mêmes exigences de raccordement aux dents qu'ils relient. Un second solide 40' comporte une primitive 41' susceptible de rouler sans glisser sur la primitive 41 et dont les arcs de spirale qui la constituent sont également pourvus ou dépourvus de dents selon qu'ils sont représentés en trait fin ou gras.

L'intérêt de ce type d'engrenage réside dans la loi de variation du mouvement du solide mené (par exemple 40') en fonction d'une rotation uniforme du solide menant 40 autour de son axe C. Ainsi en associant deux arbres menés coaxiaux à deux solides menés tels que 40' mais décalés l'un par rapport à l'autre de 100 grades, on peut obtenir des mouvements relatifs entre ces deux arbres se répétant cycliquement, qu'il peut être intéressant d'exploiter dans de nombreux mécanismes, notamment volumétriques.

Equiper selon l'invention une courbe primitive d'une denture conforme s'applique a priori à toute forme de primitive et notamment à celles en forme d'ellipse.

Par extension, on peut prévoir d'équiper de denture une primitive comportant une succession d'arcs d'ellipse, de cercle, de spirale logarithmique, que cette primitive soit ouverte ou fermée. On constitue ainsi des couples d'engrenages dont l'un et/ou l'autre peuvent être polylobé ou l'un être en forme de crémaillère. Bien entendu l'invention couvre également des secteurs dentés coopérant entre eux ou avec des crémaillères.

Ce n'est pas sortir du cadre de l'invention que de prévoir des dentures de type hélicoïdal ou en chevron à partir des profils conformes à l'invention selon le même principe que celui permettant de passer d'une denture classique droite à une denture hélicoïdale ou à chevron (décalage angulaire progressif des plans de dent se succédant le long de l'axe de rotation de l'axoïde).

L'invention trouve une application dans le domaine de la transmission mécanique de mouvements.

sion (p) retenu, située à l'intérieur de la courbe primitive (PB) et par une partie (2B) (face) à l'extérieur de la courbe primitive (PB), telle que le point de contact (M) instantané entre la face (2B) de dent avec le flanc (1'A) de la dent coopérante se situe sur la tangente au cercle (CA) de définition du flanc (1A, 1'A) passant par le point de contact instantané (N) des primitives (P'A, P'B).

2. Denture comprenant une pluralité de dents selon la revendication 1, caractérisée en ce que la courbe primitive (PA, PB) comporte au moins un arc denté de spirale logarithmique.

3. Denture comprenant une pluralité de dents selon la revendication 1 ou la revendication 2, caractérisée en ce que la courbe primitive comporte au moins un arc denté d'ellipse.

4. Denture selon l'une quelconque des revendications 2 et 3, caractérisée en ce que la courbe primitive (PA, PB) comporte au moins un arc denté de cercle qui correspond au cas particulier d'une spirale logarithmique d'angle (G) caractéristique droit ou au cas particulier d'une ellipse à foyers confondus.

5. Denture selon l'une quelconque des revendications 2 à 4, caractérisée en ce qu'entre deux portions d'arcs dentés elle comporte un arc de courbe primitive (33, 33') dépourvu de denture constitué par un arc de spirale logarithmique tangent à ses extrémités aux flanc (31a) et face (32b) des dents qu'il relie.

6. Denture selon l'une quelconque des revendications 2 à 4, caractérisée en ce qu'entre deux portions d'arcs dentés, elle comporte un arc de courbe primitive dépourvu de denture constitué par un arc elliptique tangent par ses extrémités aux flanc et face des dents qu'il relie.

7. Engrenage équipé d'une denture selon l'une quelconque des revendications 2 à 6, caractérisé en ce que chacun des solides qui le constituent (20, 21, 30, 30', 40, 40') comporte une courbe primitive fermée composée d'une succession d'arcs de cercle et/ou d'ellipse et/ou de spirale logarithmique conjugués.

8. Engrenage du type pignon-crémaillère ou secteurs dentés selon la revendication 7, caractérisé en ce que l'un au moins des solides comporte une courbe primitive ouverte.

9. Engrenage selon la revendication 7 ou la revendication 8, caractérisé en ce que les portions de courbe primitive dentées possèdent des dents hélicoïdales ou en chevron.

**Revendications**

1. Dent pour l'accouplement par denture de deux solides (A, B) roulant sans glisser l'un sur l'autre le long de leur courbe primitive respective (PA, PB), autre qu'entièrement circulaire, caractérisée en ce que le profil de sa surface active est constituée par une partie (flanc) (1B) en développante de cercle, déterminée pour un angle de pres-

**Patentansprüche**

1. Zahnform zum Kuppeln zweier Festkörper (A, B) durch Zahneingriff, die, ohne zu gleiten, aufeinander längs ihrer jeweiligen Teilkurve (PA, PB), die von einer völligen Kreisform verschieden ist, abrollen, dadurch gekennzeichnet, dass das Profil seiner aktiven Fläche durch einen Abschnitt (Flanke) (1B) gebildet wird, der als Kreisabwicklung ausgebildet ist, die durch den erzielten Eingriffswinkel (p) bestimmt wird, der am Inneren der Teilkurve (PB) liegt, sowie durch einen Abschnitt (2B) ausserhalb der Teilkurve (PB), in solcher Weise, dass der augenblickliche Kontaktpunkt (M) zwischen der Vorderseite (2B) der Zahnform mit der Flanke (1'A) der zusammenwirkenden Zahnform sich auf der Tangente des Bestimmungskreises (CA) der Flanke (1A, 1'A) befindet, die durch den augenblicklichen Kontaktpunkt (N) der Teilkurven (P'A, P'B) hindurchtritt.

2. Verzahnung mit einer Anzahl von Zahnformen nach Anspruch 1, dadurch gekennzeichnet, dass die Teilkurve (PA, PB) mindestens einen verzahnten Bogenabschnitt einer logarithmischen Spirale aufweist.

3. Verzahnung mit einer Anzahl von Zahnformen nach Anspruch 1 oder Anspruch 2, dadurch gekennzeichnet, dass die Teilkurve mindestens einen Bogenabschnitt einer Ellipse aufweist.

4. Verzahnung nach irgendeinem der Ansprüche 2 und 3, dadurch gekennzeichnet, dass die Teilkurve (PA, PB) mindestens einen verzahnten Kreisbogenabschnitt aufweist, der dem besonderen Fall einer logarithmischen Spirale mit rechtem Hauptwinkel (G) entspricht, oder dem besonderen Fall einer Ellipse mit vereinten Brennpunkten.

5. Verzahnung nach irgendeinem der Ansprüche 2 bis 4, dadurch gekennzeichnet, dass sie zwischen zwei verzahnten Bogenabschnitten einen Bogenabschnitt einer Teilkurve (33, 33') aufweist, der verzahnungsfrei ist und durch einen Bogenabschnitt einer logarithmischen Spirale gebildet wird, der an seinen Enden die Flanke (31a) und die Vorderseite (32b) der Zahnformen berührt, die er verbindet.

6. Verzahnung nach irgendeinem der Ansprüche 2 bis 4, dadurch gekennzeichnet, dass sie zwischen zwei verzahnten Bogenabschnitten einen Bogenabschnitt einer Teilkurve ohne Verzahnung aufweist, die durch einen elliptischen Bogenabschnitt gebildet wird, der mit seinen Enden die Flanke und die Vorderseite der Zahnformen berührt, die er verbindet.

7. Getriebe, das mit einer Verzahnung nach irgendeinem der Ansprüche 2 bis 6 ausgestattet ist, dadurch gekennzeichnet, dass jeder der die Verzahnung bildenden Festkörper (20, 21, 30, 30', 40, 40') eine geschlossene Teilkurve aufweist, die aus einer Folge von Bogenabschnitten eines Kreises und/oder einer Ellipse und/oder einer logarithmischen Spirale besteht, die miteinander verbunden sind.

8. Getriebe eines Bautyps aus Ritzel-Zahnstange oder verzahnten Sektoren nach Anspruch 7, dadurch gekennzeichnet, dass mindestens einer der Festkörper eine offene Teilkurve aufweist.

9. Getriebe nach Anspruch 7 oder Anspruch 8, dadurch gekennzeichnet, dass die verzahnten Abschnitte der Teilkurve schraubenförmige oder pfeilverzahnte Zahnformen aufweisen.

## Claims

1. A tooth for coupling by meshing two solids (A, B) which roll over each other along their respective pitch curves (PA, PB) without sliding, said curves being other than entirely circular, the tooth being characterized in that the profile of its active surface is constituted by a flank portion (1B) situated inside the pitch curve (PB) and in the form of an involute of a circle determined for a given pressure angle (p), and by a face portion (2B) outside the pitch curve (PB) so that the instantaneous point of contact (M) between the face portion (2B) of the tooth and the flank portion (1'A) of the co-operating tooth is situated on the tangent to the circle (CA) defining the flank portion (1A, 1'A) and passing through the instantaneous point of contact (N) between the pitch curves (P'A, P'B).

2. Toothing comprising a plurality of teeth according to claim 1, characterized in that the pitch curve (PA, PB) includes at least one logarithmic-spiral-shaped toothed arc.

3. Toothing comprising a plurality of teeth according to claim 1 or claim 2, characterized in that the pitch curve includes at least one elliptically-shaped toothed arc.

4. Toothing according to claim 2 or 3, characterized in that the pitch curve (PA, PB) includes at least one circular-shaped toothed arc which corresponds to the special case of a logarithmic spiral having a right angle as its characteristic angle (G) or to the special case of an ellipse whose focuses coincide.

5. Toothing according to any one of claims 2 to 4, characterized in that between two toothed portions of arc it includes an arc of the pitch curve (33, 33') having no teeth and constituted by a logarithmic spiral arc which is tangential at its ends to the flank (31a) and the face (32b) respectively of the teeth which it interconnects.

6. Toothing according to any one of claims 2 to 4, characterized in that between two portions of toothed arc it includes an arc of the pitch curve having no teeth and constituted by an elliptical arc which is tangential at its ends to the flank and the face respectively of the teeth which it interconnects.

7. Gearing equipped with toothing according to any one of claims 2 to 6, characterized in that each of the solids constituting the gearing (20, 21, 30, 30', 40, 40') has a closed pitch curve constituted by a succession of conjugate circular and/or elliptical and/or logarithmic-spiral arcs.

8. Gearing of the rack-and-pinion or toothed sector type and according to claim 7, characterized in that at least one of the solids includes an open pitch curve.

9. Gearing according to claim 7 or claim 8, characterized in that the toothed portions of the pitch curve have helical or herringbone teeth.

FIG_1

FIG. 2

FIG. 3

31
31a
A.
33
C
+
30
30'
33'
32
B
32b

FIG_4

$+\,_{C'}$

$\underline{40}'$

$\sim 41'$

$\underline{FIG.5}$

$\underline{40}$

$\sim 41$

$+\,^{C}$

13